Europäisches Patentamt

(19) European Patent Office

Office européen des brevets

(11) Numéro de publication: **0 1 1 3 607**
**B1**

(12) **FASCICULE DE BREVET EUROPEEN**

(45) Date de publication du fascicule du brevet:
14.05.86

(21) Numéro de dépôt: 83402301.2

(22) Date de dépôt: **30.11.83**

(51) Int. Cl.⁴: **B 04 C 3/00**, B 04 C 3/04,
F 27 B 7/20, F 28 C 3/14,
B 01 D 45/12, B 07 B 7/086

(54) **Echangeur pour le traitement thermique de matières pulvérulentes au moyen de gaz.**

(30) Priorité: **14.12.82 FR 8220909**

(43) Date de publication de la demande:
**18.07.84 Bulletin 84/29**

(45) Mention de la délivrance du brevet:
**14.05.86 Bulletin 86/20**

(84) Etats contractants désignés:
**BE CH DE GB IT LI LU NL**

(56) Documents cités:
**DE - C - 958 170**
**FR - A - 2 443 272**
**GB - A - 5 588**
**GB - A - 908 094**

**ZEMENT-KALK-GIPS, vol. 54, no. 12, décembre 1965,
Wiesbaden (DE) R. BOHMAN: "Neuere
Rohmehlvorwärmer für Drehöfen", pages 625-630
PATENTS ABSTRACTS OF JAPAN, vol. 5, no. 200, 18
décembre 1981, page 872C84**

(73) Titulaire: **FIVES-CAIL BABCOCK, Société anonyme, 7
rue Montalivet, F-75383 Paris Cedex 08 (FR)**

(72) Inventeur: **Ghestem, Gérard, 185, rue Clémenceau,
F-59211 Santes (FR)**

(74) Mandataire: **Fontanié, Etienne, FIVES-CAIL
BABCOCK 7, rue Montalivet, F-75383 Paris
Cedex 08 (FR)**

## Description

La présente invention a pour objet un échangeur pour le traitement thermique d'une matière pulvérulente au moyen de gaz constitué par une pluralité de séparateurs reliés entre eux par des conduites de telle sorte que les gaz traversent successivement tous les séparateurs, et comprenant des moyens de transfert des particules de matière d'un séparateur dans le séparateur précédent, en considérant le sens de circulation des gaz, l'un au moins de ces séparateurs comportant un corps cylindrique, à axe horizontal à la partie inférieure duquel est raccordée une trémie où sont recueillies les particules de matière séparées du courant gazeux dans ledit séparateur, une conduite reliant la sortie du séparateur précédent à une entrée dudit séparateur étant raccordée tangentiellement audit corps cylindrique et une tuyauterie reliant la pointe de la trémie à la conduite reliée à l'entrée dudit séparateur précédent. Un échangeur de ce type est décrit dans le document FR.A. 2 443 272.

Les séparateurs connus utilisés dans les échangeurs de ce type créent sur le circuit des gaz des pertes de charge élevées et nécessitent des installations de ventilation puissantes et, par conséquent, coûteuses et consommant beaucoup d'énergie.

Le but de la présente invention est de diminuer le coût et la consommation de l'installation de ventilation équipant les échangeurs de ce type.

L'échangeur, objet de l'invention, est caractérisé en ce que ledit séparateur cylindrique est muni de deux entrées ou deux sorties à ses extrémités et respectivement d'une sortie ou d'une entrée à mi-longueur, et en ce que les conduites aboutissant à l'entrée ou aux entrées ou partant de la sortie ou des sorties dudit séparateur sont raccordées tangentiellement au corps cylindrique dudit séparateur.

Suivant un mode de réalisation préféré, les séparateurs sont superposés et ceux munis de deux entrées à leurs extrémités et d'une sortie médiane alternent avec ceux munis d'une entrée médiane et de deux sorties à leurs extrémités. Les séparateurs sont disposés alternativement d'un côté et de l'autre d'un plan vertical parallèle à leurs axes. Les conduites reliant les séparateurs entre eux peuvent être verticales ou inclinées. Cette dernière disposition permet encore de réduire la hauteur de l'échangeur.

Les séparateurs munis d'une entrée médiane et de deux sorties à leurs extrémités peuvent comporter deux trémies pour recueillir les particules séparées des deux courants gazeux se déplaçant de l'entrée vers les sorties, la pointe de chaque trémie étant reliée à l'une des conduites amenant les gaz aux deux entrées du séparateur précédent.

L'échangeur objet de l'invention peut être autoporteur ou supporté par une charpente ou un bâtiment en forme de tour.

La description qui suit se réfère aux dessins l'accompagnant qui montrent, à titre d'exemple non limitatif, deux modes de réalisation de l'invention et sur lesquels:

La fig. 1 est une vue en élévation d'un échangeur conforme à l'invention;

La fig. 2 est une vue en coupe verticale, suivant 2-2, de l'échangeur de la fig. 1;

La fig. 3 est une vue en élévation d'une variante de réalisation de l'échangeur; et

La fig. 4 est une vue en coupe verticale, suivant 4-4, de l'échangeur de la fig. 3.

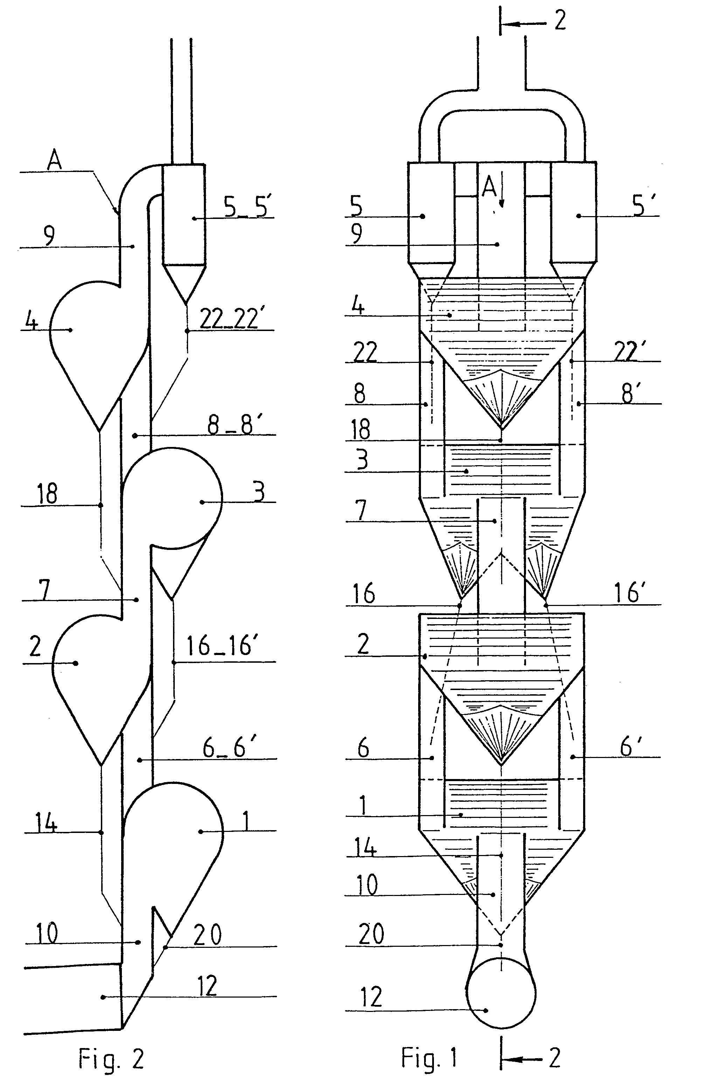

L'échangeur représenté sur les fig. 1 et 2 est constitué par une série de séparateurs 1, 2, 3, 4, 5 et 5' superposés et reliés entre eux par des conduites verticales 6, 6', 7, 8, 8' et 9. Le cyclone 1 est relié par une conduite 10 à un foyer ou un four 12.

Les séparateurs 5 et 5' sont des cyclones à axe vertical de construction classique et couramment utilisés dans ce type d'échangeur.

Les échangeurs 1 à 4 sont pratiquement tous identiques et comportent un corps cylindrique, à axe horizontal, à la partie inférieure duquel sont raccordées une ou deux trémies en forme de pyramide inversée. Ils comportent à leurs extrémités et à mi-longueur des ouvertures auxquelles aboutissent les conduites de liaison 6 à 10; ces ouvertures sont situées sur un même côté du corps du séparateur et les conduites de liaison sont raccordées tangentiellement à ce dernier.

Les gaz chargés des particules de la matière à traiter entrent tangentiellement dans les séparateurs, à leurs extrémités ou en leur milieu, et décrivent un trajet en spirale jusqu'aux ouvertures de sortie situées au milieu du séparateur ou à ses extrémités. Les particules sont projetées sur la paroi du séparateur par la force centrifuge, glissent le long de la paroi, sous l'action de la pesanteur, et tombent au fond des trémies situées à la partie inférieure des séparateurs.

Les pointes des trémies des séparateurs 2, 3 et 4 sont reliées par des tuyauteries 14, 16, 16' et 18 aux conduites 10, 6, 6' et 7 respectivement. La pointe de la trémie du séparateur 1 est reliée par une tuyauterie 20 à un appareil de traitement ultérieur, tel qu'un four 12. Des tuyauteries 22 et 22' relient les pointes des cyclones 5 et 5' aux conduites 8 et 8', respectivement.

Dans l'exemple représenté, les séparateurs 1 à 4 sont disposés alternativement d'un côté et de l'autre d'un plan vertical parallèle à l'axe des séparateurs et contenant l'axe commun des conduites 7, 9 et 10 qui sont alignées et les axes des conduites 6, 6', 8 et 8'; cette disposition n'est pas obligatoire. Le nombre de séparateurs pourrait aussi être différent de quatre.

Pour expliquer le fonctionnement de l'échangeur, on supposera qu'il s'agit d'un préchauffeur destiné à réchauffer des matières solides pulvérulentes au moyen des fumées d'un four 12 où ces matières subissent un traitement ultérieur.

Les fumées sortant du four sont amenées par la conduite 10 au séparateur 1, traversent ce dernier, puis circulent successivement dans les conduites 6 et 6', le séparateur 2, la conduite 7, le séparateur 3, les conduites 8 et 8', le séparateur 4, la conduite 9 et les cyclones 5 et 5'. La sortie des cyclones 5 et 5' est reliée à l'aspiration d'un ventilateur de tirage, non représenté, qui assure la circulation des fumées dans le four et dans l'échangeur.

La matière à traiter est introduite en A dans la conduite 9, entraînée par les fumées qui y circulent et transportée en suspension jusqu'aux cyclones 5 et 5'. Dans ces cyclones, les particules de la matière à traiter sont séparées du courant gazeux, tombent au fond du cyclone et sont amenées par les tuyauteries 22 et 22' dans les conduites 8 et 8'. Les fumées circulant dans ces conduites entraînent les particules jusqu'au séparateur 4. Comme on l'a expliqué plus haut, les deux courants de fumées contenant les particules en suspension circulent en spirale dans le séparateur depuis ses extrémités, où se trouvent les deux orifices d'entrée, jusqu'en son milieu où se trouve l'orifice de sortie. Au cours de ce déplacement, les particules soumises à l'action de la force centrifuge sont projetées sur la paroi, glissent sur celle-ci et tombent dans la trémie constituant la partie inférieure du séparateur; de là, les particules sont amenées par la tuyauterie 18 dans la conduite 7.

Dans le séparateur 3, où les particules sont entraînées par les fumées circulant dans la conduite 7, le même phénomène se produit, à ceci près que les fumées se divisent en deux courants à leur entrée dans le séparateur et circulent du milieu vers les extrémités de celui-ci. Les particules séparées sous l'action de la force centrifuge, de chacun de ces courants sont recueillies dans les trémies du séparateur et amenées dans les conduites 6 et 6' par les tuyauteries 16 et 16', respectivement. On aurait pu utiliser une seule trémie, comme sur les autres séparateurs, mais il aurait alors fallu prévoir, à la sortie de la trémie, un dispositif pour diviser en deux le courant de matière.

Les particules de matière à traiter passent ensuite dans le séparateur 2 qui fonctionne comme le séparateur 4, puis dans le séparateur 1, qui fonctionne comme le séparateur 3, et sont enfin introduites dans le four par la tuyauterie 20.

Dans les conduites 9, 8, 8', 7, 6, 6' et 10 et dans les séparateurs, du moins sur une partie du trajet, les particules et les fumées circulent dans le même sens, mais en passant d'un séparateur à l'autre elles circulent en sens inverse ce qui permet de réaliser un échange thermique à contre-courant très efficace.

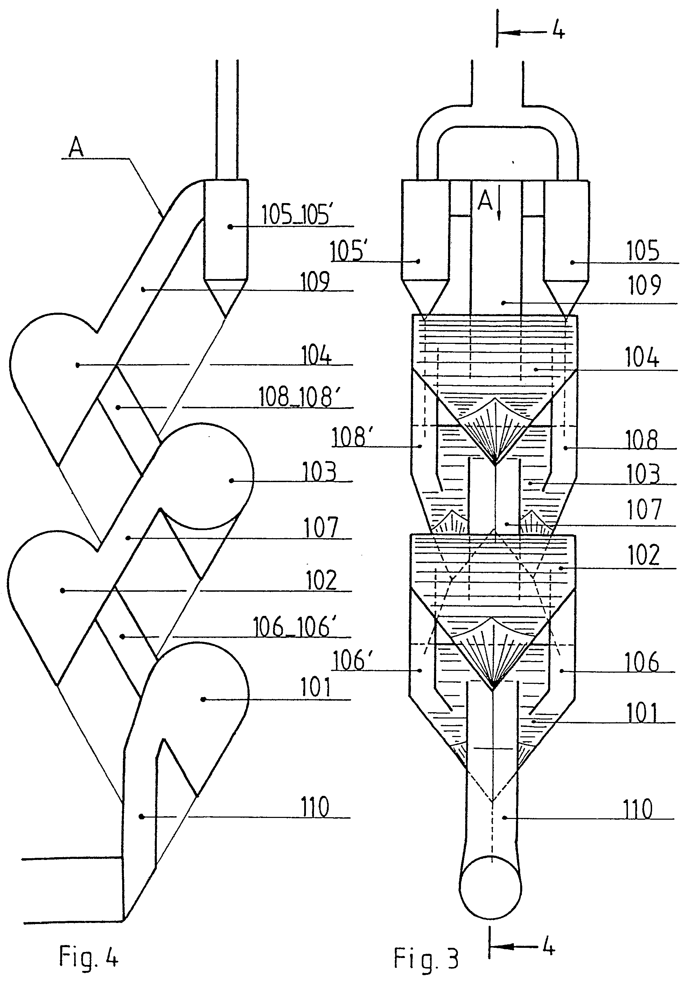

L'échangeur représenté sur les fig. 3 et 4 ne diffère de celui des fig. 1 et 2 que par la disposition des conduites de liaison 106, 106', 107, 108, 108' et 109 entre les séparateurs 101, 102, 103, 104, 105 et 105' qui sont inclinées alternativement dans un sens et dans l'autre, au lieu d'être verticales. Cette disposition permet de donner à l'échangeur et, par conséquent, à la charpente ou au bâtiment le supportant une hauteur plus réduite et une largeur plus importante. Elle est particulièrement intéressante lorsque l'échangeur doit être installé dans une zone où existent des risques de séismes.

Il est bien entendu que toutes les modifications qui peuvent être apportées aux modes de réalisation décrits par l'emploi de moyens techniques équivalents entrent dans le cadre de l'invention.

## Revendications

1. Echangeur pour le traitement thermique d'une matière pulvérulente au moyen de gaz constitué par une pluralité de séparateurs (1, 2, 3, 4, 5, 5' − 101, 102, 103, 104, 105, 105') reliés entre eux par des conduites (6, 6', 7, 8, 8', 9, 106, 106', 107, 108, 108', 109) de telle sorte que les gaz traversent successivement tous les séparateurs, et comprenant des moyens de transfert (14, 16, 16', 18, 22, 22') des particules de matière d'un séparateur dans le séparateur précédent, en considérant le sens de circulation des gaz, l'un au moins de ces séparateurs comportant un corps cylindrique, à axe horizontal, à la partie inférieure duquel est raccordée une trémie où sont recueillies les particules de matière séparées du courant gazeux dans ledit séparateur, une conduite reliant la sortie du séparateur précédent à une entrée dudit séparateur étant raccordée tangentiellement audit corps cylindrique et une tuyauterie reliant la pointe de la trémie à la conduite reliée à l'entrée dudit séparateur précédent, caractérisé en ce que ledit séparateur cylindrique est muni de deux entrées ou deux sorties à ses extrémités et respectivement d'une sortie ou d'une entrée à mi-longueur, et en ce que les conduites (6, 6', 7, 8, 8', 9 − 106, 106', 107, 108, 108', 109) aboutissant à l'entrée ou aux entrées ou partant de la ou des sorties dudit séparateur sont raccordées tangentiellement au corps cylindrique dudit séparateur.

2. Echangeur selon la revendication 1, caractérisé en ce que les séparateurs sont superposés et ceux (2, 4, 102, 104) munis de deux entrées à leurs extrémités et d'une sortie médiane alternent avec ceux (1, 3, 101, 103) munis d'une entrée médiane et de deux sorties à leurs extrémités.

3. Echangeur selon la revendication 2, caractérisé en ce que les séparateurs sont disposés alternativement d'un côté et de l'autre d'un plan vertical parallèle aux axes des séparateurs.

4. Echangeur selon la revendication 2 ou 3, caractérisé en ce que les conduites (6, 6', 7, 8, 8', 9) reliant les séparateurs (1, 2, 3, 4, 5, 5') entre eux sont verticales.

5. Echangeur selon les revendications 2 ou 3, caractérisé en ce que les conduites (106, 106', 107, 108, 108', 109) reliant les séparateurs (101, 102, 103, 104, 105, 105') entre eux sont inclinées alternativement dans un sens et dans l'autre.

6. Echangeur selon la revendication 2, 3, 4 ou 5, caractérisé en ce que au moins un des séparateurs (3, 103) munis d'une entrée médiane et de deux sorties à leurs extrémités comporte deux trémies, la pointe de chaque trémie étant reliée à l'une des conduites (6, 6', 106, 106') amenant les gaz aux deux entrées du séparateur précédent (2, 102).

## Patentansprüche

1. Austauscher für die thermische Behandlung von pulverförmigem Material mit einem Gas, bestehend aus mehreren Abscheidern (1, 2, 3, 4, 5, 5', 101, 102, 103, 104, 105, 105'), die miteinander durch Leitungen (6, 6', 7, 8, 8', 9, 106, 106', 107, 108, 108', 109) so verbunden sind, dass die Gase alle Abscheider nacheinander durchströmen, und umfassen Mittel (14, 16, 16', 18, 22, 22') zur Übertragung der Stoffpartikeln von einem Abscheider in den vorgeschalteten Abscheider unter Berücksichtigung der Gasstromrichtung, wobei mindestens einer dieser Abscheider einen zylindrischen Körper mit Horizontalachse aufweist, an dessen unteres Ende ein Trichter angeschlossen ist, in dem die in dem vorgenannten Abscheider vom Gasstrom getrennten Stoffpartikeln gesammelt werden, eine den Austritt des vorgenannten Abscheiders verbindende Leitung an den zylindrischen Körper tangential angeschlossen ist und eine Rohrleitung die Spitze des Trichters mit der an den Eintritt des vorgeschalteten Abscheiders angeschlossenen Leitung verbindet, dadurch gekennzeichnet, dass der vorgenannte zylindrische Abscheider an seinen Enden mit zwei Eintritten oder zwei Austritten und auf halber Länge jeweils mit einem Austritt oder einem Eintritt versehen ist, und dass die zu dem Eintritt bzw. den Eintritten des vorgenannten Abscheiders führenden oder aus dem Austritt bzw. den Austritten des vorgenannten Abscheiders ausgehenden Leitungen (6, 6', 7, 8, 8', 9, 106, 106', 107, 108, 108', 109) an den zylindrischen Körper des vorgenannten Abscheiders tangential angeschlossen sind.

2. Abscheider nach Anspruch 1, dadurch gekennzeichnet, dass die Abscheider überlagert sind, und diejenigen (2, 4, 102, 104), die mit zwei Eintritten an den Enden und mit einem mittleren Austritt versehen sind, mit denjenigen (1, 3, 101, 103) abwechseln, die mit einem mittleren Eintritt und mit zwei Austritten an den Enden versehen sind.

3. Abscheider nach Anspruch 2, dadurch gekennzeichnet, dass die Abscheider abwechselnd auf einer und auf der anderen Seite einer zu den Achsen der Abscheider parallelen Vertikalebene angeordnet sind.

4. Abscheider nach Anspruch 2 oder 3, dadurch gekennzeichnet, dass die Leitungen (6, 6', 7, 8, 8', 9), die die Abscheider (1, 2, 3, 4, 5, 5') miteinander verbinden, vertikal sind.

5. Abscheider nach Anspruch 2 oder 3, dadurch gekennzeichnet, dass die Leitungen (106, 106', 107, 108, 108', 109), die die Abscheider (101, 102, 103, 104, 105, 105') miteinander verbinden, abwechselnd in der einen Richtung und der anderen geneigt sind.

6. Abscheider nach Anspruch 2, 3, 4 oder 5, dadurch gekennzeichnet, dass mindestens einer der mit einem mittleren Eintritt und mit zwei Austritten an den Enden versehenen Abscheider (3, 103) zwei Trichter aufweist, wobei die Spitze jedes Trichters mit einer der Leitungen (6, 6', 106, 106') verbunden ist, die das Gas zu den beiden Eintritten des vorgeschalteten Abscheiders (2, 102) führen.

## Claims

1. Exchanger for thermally treating pulverulent material with a gas, consisting of a plurality of separators (1, 2, 3, 4, 5, 5' — 101, 102, 103, 104, 105, 105') connected to one another by pipes (6, 6', 7, 8, 8', 9, 106, 106', 107, 108, 108', 109) in such a way that the gases flow across all the separators in succession, and comprising means (14, 16, 16', 18, 22, 22') for transferring particles of material from one separator to the preceding separator, considering the flow direction of the gases, at least one of these separators having a horizontal cylindrical housing the bottom of which is connected to a hopper where the particles of material are collected, after being separated from the gas flow in the said separator, a pipe joining the outlet of the preceding separator to an inlet of the said separator being tangentially connected to the said cylindrical housing and a pipe connecting the tip of the hopper to the pipe linked to the inlet of the said preceding separator, characterized by the fact that the said cylindrical separator has two inlets or two outlets at its ends and, respectively, one outlet or one inlet mid-way, and by the fact that the pipes (6, 6', 7, 8, 8', 9, 106, 106', 107, 108, 108', 109) leading to the outlet or outlets or going off the inlet or inlets of the said separator are tangentially connected to the cylindrical housing of the said separator.

2. Exchanger according to claim 1, characterized by the fact that the separators are superimposed and that those (2, 4, 102, 104) provided with two inlets at their ends and a mid-way outlet alternate with those (1, 3, 101, 103) provided with a mid-way inlet and two outlets at their ends.

3. Exchanger according to claim 2, characterized by the fact that the separators alternate on both sides of a vertical plane, parallel to the axes of the separators.

4. Exchanger according to claim 2 or 3, characterized by the fact that the pipes (6, 6', 7, 8, 8', 9) connecting the separators (1, 2, 3, 4, 5, 5') to one another are vertical.

5. Exchanger according to claim 2 or 3, characterized by the fact that the pipes (106, 106', 107, 108, 108', 109) connecting the separators (101, 102, 103, 104, 105, 105') to one another are alternatively inclined in one direction and another.

6. Exchanger according to claim 2, 3, 4 or 5, characterized by the fact that at least one of the separators (3, 103) provided with a mid-way inlet and two outlets at their ends has two hoppers, the top of each hopper being connected to one of the pipes (6, 6', 106, 106') which convey the gases to both inlets of the preceding separator (2, 102).

0 1 1 3 607

Fig. 2

Fig. 1

Fig. 4

Fig. 3

0 113 607

7